# EUROPÄISCHE PATENTSCHRIFT

(11) **EP 1 312 460 B1**
(45) Veröffentlichungstag und Bekanntmachung des Hinweises auf die Patenterteilung: **31.08.2005**
(21) Anmeldenummer: 02019522.8
(22) Anmeldetag: 31.08.2002
(51) Int. Cl.: B29C 65/00, B29D 30/42

(54) **Stumpfes Spleissen von gummierten Bandabschnitten**
Butt-joining of elastomeric strips
Soudage bout à bout de bandes en caoutchouc

(30) Priorität: 16.11.2001 DE 10156472
(43) Veröffentlichungstag der Anmeldung: 21.05.2003
(73) Patentinhaber: Continental Aktiengesellschaft, 30165 Hannover (DE)
(72) Erfinder: Hersing, Hans, 30627 Hannover (DE)

(56) Entgegenhaltungen:
- EP-A- 0 417 991
- EP-A- 0 676 274
- DE-A- 2 359 131
- JP-A- 5 159 980
- US-A- 3 325 328
- US-A- 4 765 862
- PATENT ABSTRACTS OF JAPAN vol. 008, no. 274 (M-345), 14. Dezember 1984 (1984-12-14) & JP 59 145128 A (BRIDGESTONE KK), 20. August 1984 (1984-08-20)

## Beschreibung

Die Erfindung handelt von einem Verfahren zum stumpfen Spleißen und einer Vorrichtung zur Durchführung des Verfahrens nach der Gattung der Ansprüche 1 und 7.

Die erfindungsgemäße Vorrichtung zum stumpfen Spleißen ("butt splicer") ist Teil einer Spleißanlage, die in verschiedenen Bereichen eingesetzt werden kann. Ein spezielles Einsatzgebiet betrifft die Herstellung von Stahl- und Textil-Cord-Karkassen für PKW- und LKW-Reifen. Ein weiteres Einsatzgebiet betrifft faserverstärkte Kautschukbahnen für die Keilriemenherstellung.

### Stand der Technik

Diese Karkassen werden aus Kautschuk-beschichteten, bis zu ca. 1,5 m breiten Cordbahnen (z. B. kalandriert) hergestellt. Und zwar werden diese aus Stahl- oder Textil-Cord bestehenden Bahnen in 500 bis 800 mm breite Abschnitte zerlegt, deren Seiten stumpf aneinander gefügt werden. In dem dabei entstehenden neuen Band in der Breite von 500 bis 800 mm sind die zuvor längs verlaufenden Corde (Kettfäden) nun quer angeordnet.

Das Zusammenfügen der Abschnitte kann überlappend erfolgen. Es ist leicht einzusehen, das ein Überlappen eine Materialverschwendung darstellt, was bei einer Großserienproduktion letztendlich beträchtliche Ausmaße annehmen kann. Auch führt eine Überlappung des Karkassen-Materials zu einer Unwucht der daraus hergestellten Reifen. Bei der Fertigung der Reifen sind spezielle Vorkehrungen erforderlich.
Um diese sich aus einer Überlappung des Karkassen-Materials ergebenden Nachteile zu vermeiden, ist man bestrebt, die Abschnitte der Kautschuk-beschichteten Cordbahnen stumpf miteinander zu verbinden.

Die in der EP 0 860 266 A2 (DE 197 07 367 C1) beschriebene Spleißmaschine ist in der Lage, unter einem spitzen Winkel abgetrennte Abschnitte aneinander zu fügen. Zur Durchführung dieses Verfahrens sind komplizierte Bewegungen zu realisieren, die nicht nur in Fließbandrichtung verlaufen sondern auch eine Querkomponente aufweisen.

Gemäß der US-PS 5,221,409 werden rechtwinklig abgetrennte Enden der Abschnitte zwar stumpf miteinander verbunden, aber es erfolgt eine komplizierte Verzahnung der Enden miteinander, was eine aufwendige Maschinerie erforderlich macht.

Das US-Patent 4,867,823 beschreibt das stumpfe Zusammenfügen von gummierten Gewebeabschnitten. Nach dieser Methode werden konische Rollen unter Druck über die sich lose gegenüberstehenden Enden bewegt. Aufgrund des schrägen Winkels soll ein Aneinanderdrücken der Enden erreicht werden.
Diese Querbewegung ist mit einem gewissen Zeitaufwand verbunden. Deshalb muss der ansonsten kontinuierliche Fließbandablauf während des Querrollierens unterbrochen werden.

Aus der DE-OS 23 59 131 ist eine Vorrichtung zum stumpfen Verbinden von unter 90° geradlinig geschnittenen Enden zweier vulkanisierbarer, parallele Verstärkungsseile aus Textil oder Stahl enthaltenden Kautschukbahnen mit jeweils einem oberhalb und unterhalb der Bahn-Enden jeweils angeordneten Backenpaar, deren Backen horizontal zueinander und voneinander bewegbar sind, und wobei die beiden Backenpaare insgesamt vertikal zueinander und voneinander bewegbar sind. Das Zueinander- und Voneinanderweg-Bewegen der Backen wird mittels schiefer Ebenen realisiert, auf denen die Backen entlang gleiten.
Der Nachteil dieser Spleißmethode besteht darin, dass die einzelnen Backenpaare nicht unabhängig voneinander betätigt werden können, d. h. das E*inspannen* der Bahn-Enden erfolgt stets synchron und in gleichem Maße mit dem *Zueinanderführen* der Bahn-Enden. Zwischen den jeweiligen Backen der beiden Backenpaare sind zwar Schraubfedern zum Verstellen der Zuspannkraft vorgesehen. Aber während des Betätigungsvorgangs erfolgt stets ein synchrones Zusammenfahren aller vier Backen.

Die EP 0 676 274 A2 beschreibt das stumpfe Zusammenfügen von gummierten Gewebeabschnitten. Nach dieser Methode drücken ineinander greifende Backenpaare mit Hilfe einer Dreh- und Schubbewegyung die sich gegenüberstehenden Enden zusammen. Die Backenpaare sind dabei elastisch über mit Innendruck beaufschlagbare Gummischläuche abgestützt.
Die Patent Abstracts of Japan, vol.008, no.274 (M-345), 14. Dez. 1984 (1984-12-14) & JP 59145128 offenbaren ein ähnlichen Verfahrens, wobei hier mit ineinander greifenden Backenpaaren ein sich überlappender Spleiss erzeugt wird. Die Backenpaare werden dabei horizontal und vertikal jeweils linear bewegt.
Die US 4,765,862 offenbart ebenfalls ein Verfahren bei der der Spleiss über ein Zusammendrücken von gegenüberliegenden Backenpaaren erreicht wird, wobei hier die Backenführung mit Hilfe einer Parallelogramm-Aufhängung erfolgt.
Die JP 51 59980 A zeigt insg. zwei Spleissmethoden. Bei der 1. Methode wird das Zusammenpressen über aufblasbare Bälge erreicht, die zur Abstützung bei Ihrer Ausdehnung in einer Richtung blockiert werden, und bei der 2. Methode wird der Anpressdruck wiederum über federnd gelagerte Backenpaare erzeugt, die die über Hebeltriebe gegeneinander gedrückt werden.

Ein wesentlicher Nachteil der in den Entgegenhaltungen genannten Verfahren ist damit verbunden, dass die zu verbindenden Abschnitte in der Regel in Draufsicht unregelmäßig geschnittene Schnittkanten besitzen. Beim Spleißvorgang kann dadurch der Fall eintreten, dass die zu verbindenden Abschnitte mit unterschiedlichem Anpressdruck zusammengedrückt werden. Dadurch weist die Verbindungsnaht nach dem Spleißvorgang unterschiedliche Festigkeitswerte auf, die dann beispielsweise auch beim fertig hergestellten Reifen auffallen können.

Ausgehend vom Stand der Technik liegt der Erfindung die Aufgabe zu Grunde, die Abschnitte so zu verbinden, dass die Verbindung eine hohe und konstante Festigkeit besitzt.

Gelöst wird die Aufgabe durch die kennzeichnenden Merkmale der Ansprüche 1 and 7.

### Vorteile der Erfindung

Das erfindungsgemäße Verfahren mit den Merkmalen des Hauptanspruchs und die zur Durchführung des Verfahrens beschriebene Vorrichtung hat demgegenüber den Vorteil, dass die beiden Backenpaare unabhängig voneinander betätigt werden können.
Da der Spleißvorgang gleichzeitig über die gesamte Breite erfolgt, ergibt sich - verglichen mit Verfahren, die durch eine Querbewegung gekennzeichnet sind - eine Zeitersparnis. Außerdem ist kein seitliches Verschieben möglich
Weitere Vorteile sind:
- Spezifisch gleiche Kraft über die gesamte Spleißbreite, unabhängig von nicht geraden Lagenkanten (Qualität).
- Aufgrund der Trommelausführung mit zwei Spleißunterteilen eine hohe Wirtschaftlichkeit der Anlage.
- Die gleichmäßige Krafteinwirkung bleibt über eine bestimmte Zeit erhalten, was die Spleißqualität beträchtlich erhöht.
- Eine integrierte Anschlagleiste gewährleistet einen definierten Spalt zwischen den Lagen-Enden in kürzester Zeit.

### Zeichnung

Ein Ausführungsbeispiel der Erfindung ist in den Zeichnungen dargestellt und in der nachfolgenden Beschreibung näher erläutert. Es zeigt:
Fig. 1 eine erfindungsgemäße Spleißanlage, insbesondere die eigentliche Spleißvorrichtung, in Seitenansicht;
Fig. 2 dieselbe Spleißvorrichtung von vorn;
Fig. 3 Details von Spleißober- und Unterteil, in Seitenansicht,
Fig. 4 Spleißober- und Unterteil von vorn; und
Fig. 5 Details von Spleißober- und -Unterteil zur Verdeutlichung der Funktionsweise des Spleißvorganges.

### Beschreibung der Erfindung

### 1. Aufbau:

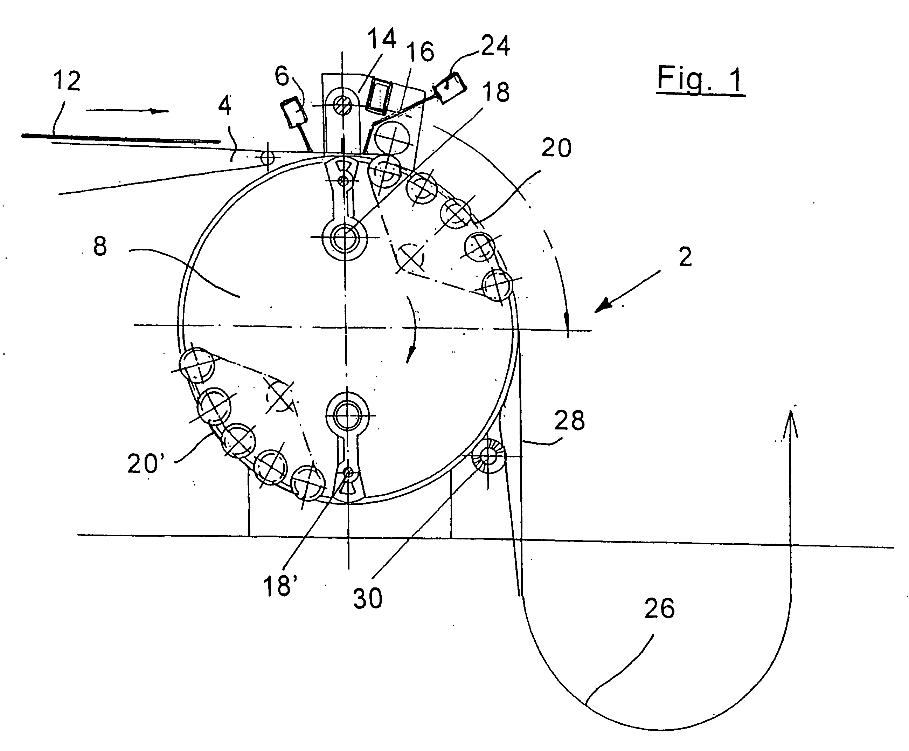

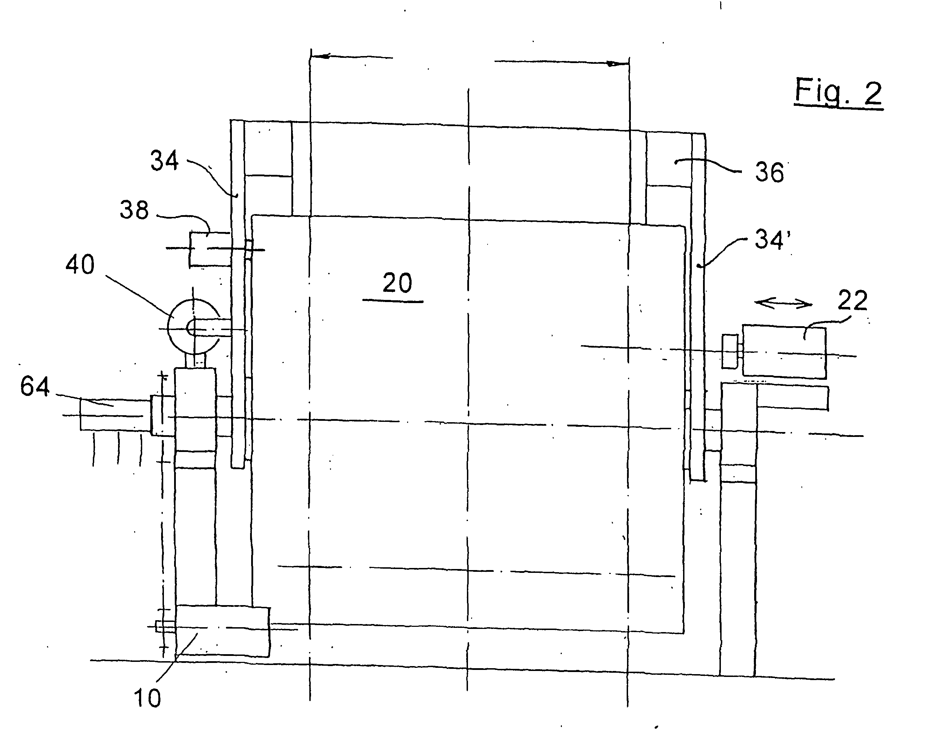

Bei der in Fig. 1 dargestellten Ausführungsform handelt es sich um eine 90°-Spleißanlage 2. Sie weist die folgenden Komponenten auf:
- einen Zuführ-Gurtförderer 4, angetrieben durch einen Positioniermotor (nicht dargestellt), gesteuert über Fotozelle 6 und Wegerfassung, zum Transport und Positionieren einzelner Abschnitte 12;
- eine Spleißtrommel 8, die gemäß der vorliegenden Erfindung als Spleißunterlage dient, mit Positioniermotor (jeweils 180° Drehwinkel) 10 (Fig. 2), einen sequentierten Trommelmantel, zwei Trommelböden mit Achse und Lagerung, bestehend aus:

- einem um die Trommelachse unter 90° schwenkbaren Spleißoberteil 14, welches mit einer pneumatisch betätigbaren Andrückrolle 16 ausgerüstet ist;
- zwei unter 180° versetzt angeordneten Spleißunterteilen 18 und 18'; und
- jeweils einer, dem jeweiligen Spleißunterteil 18 bzw. 18' nachgeordneten Rollenbahn 20 bzw. 20';

[Der Antrieb der jeweiligen in Arbeitspositionen befindlichen Rollenbahn 20 bzw. 20' erfolgt durch einen ein- und auskuppelbaren Positioniermotor 22 (Fig. 2), gesteuert über eine Fotozelle 24 mit Wegerfassung.
Der halbe Trommelumfang muss größer sein als die maximale Abschnittlänge (Kalanderbahnbreite).]
- einer Ausgleichsschleife 26, in die die gespleißten Abschnitte (Lagenbahn) 28 gefördert werden und welche eine Aufwickelstation steuert;
- einer angetriebenen Bürstenwalze 30 zum Lösen eines evtl. anhaftenden Abschnitts 28 von der Trommel 8.
- Die Steuerung der Spleißanlage 2 erfolgt durch eine speicherprogrammierbare Steuerung (SPS).

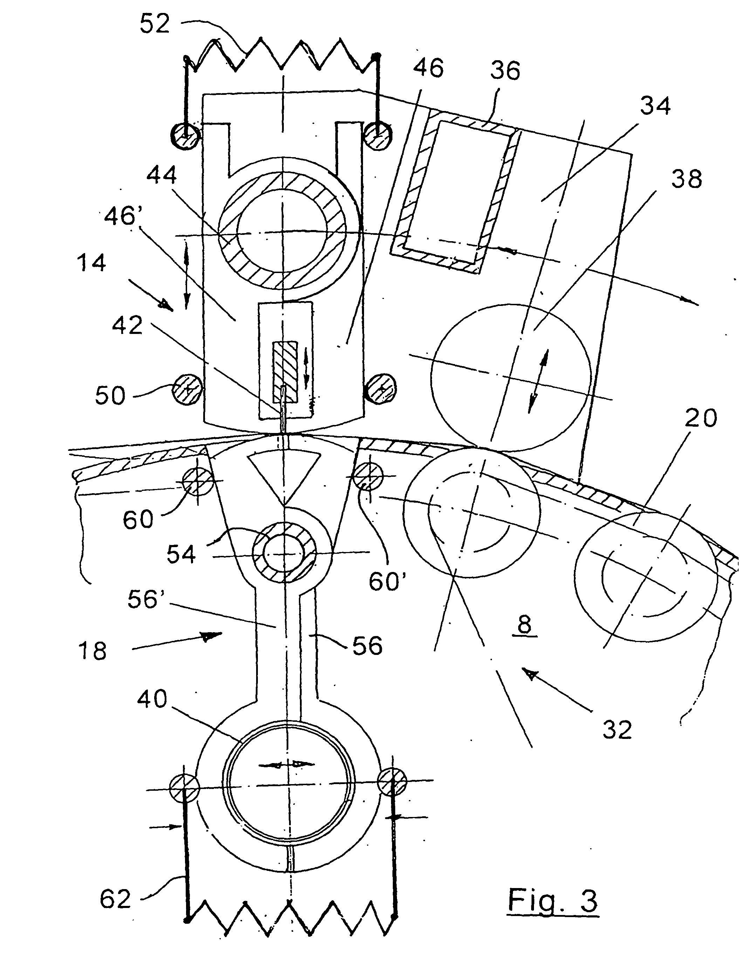

Die eigentliche Spleißvorrichtung 32 (Fig. 3) besteht aus dem Spleißoberteil 14 und zwei Spleißunterteilen 18 und 18'.

Das Spleißoberteil 14 ist aufgebaut auf den auf der Trommelachse gelagerten Seitenwänden 34 und 34' (siehe auch Fig. 2), einer sie verbindenden Traverse 36, einer pneumatisch betätigten, formschlüssigen Arretierung 38 (Fig. 2), mit dem Trommelboden, sowie einem pneumatisch betätigten Schwenkmechanismus 40 (Fig. 2).

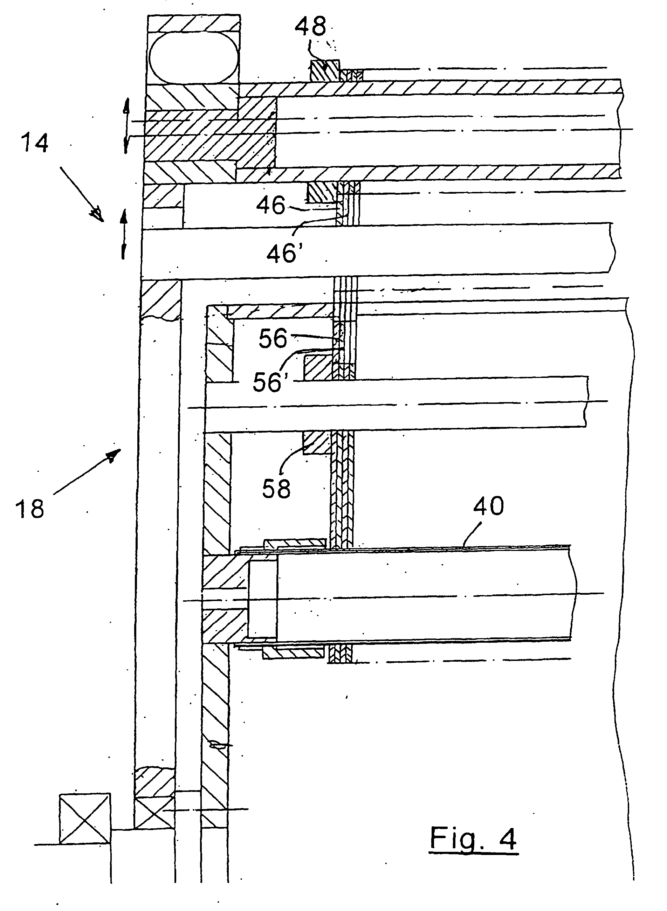

Oberhalb der Spleißtrommel 8 (Fig. 1) sind zwischen den Seitenwänden 34 und 34' folgende, in Fig. 3 dargestellte Komponenten integriert:
- eine pneumatisch senkrecht zu betätigende quer zur Förderrichtung (Lagenwinkel 90°) angeordnete Anlageleiste 42,
- eine pneumatisch senkrecht zu betätigende, ebenfalls quer zur Förderrichtung angeordnete Hohlwelle 44 mit den rechten und linken, im Wechsel aufgesteckten, schwenkbaren Spleißlamellen 46 und 46', sowie den sie seitlich begrenzenden Ringen 48 (Fig. 4),
- Anschlagbolzen 50, 50',
- ein federbelasteter Rückholmechanismus 52.

Die Spleißlamellen 46 und 46' (siehe auch Fig. 4) sind derart ausgebildet, dass sie in angehobener Position des Spleißoberteiles 14 auf ihrer Unterseite einen quer verlaufenden, mittigen Spalt bilden.
Variante: dass sie auf der Unterseite in der Mitte bereits gleichmäßig verzahnt sind. (Dies gilt nur für das Spleißoberteil 14.)

Die Spleißunterteile 18, 18' sind um 180° über jeweils eine Hohlwelle 54 fest in den Trommelböden aufgenommen, wobei die oberen Flächen von Spleißlamellen 56 und 56' in gleicher Höhe wie die Trommeloberfläche liegen und bestehen jeweils aus:
- der Hohlwelle 54 mit dem rechten und linken im Wechsel aufgesteckten, schwenkbaren, zangenartig ausgebildeten Spleißlamellen 56 und 56', sowie sie seitlich begrenzende Ringe 58 (Fig. 4),
- dem zwischen den Spleißlamellen 56 und 56' unterhalb der Hohlwelle 54 liegenden elastischen Schlauch 40, der pneumatisch be- und entlüftbar ist, und bei Belüftung den Spleißvorgang auslöst,
- zwei Anschlagbolzen 60 und 60',
- einem federbelasteten Rückholmechanismus 62, und
- einer Dreh-Luftzuführung 64 (Fig. 2).

Die Spleißlamellen 56 und 56' jedes Spleißunterteiles 18 bzw. 18' sind auf der Oberseite in gleicher Weise ausgebildet wie die Spleißlamellen 46 und 46' des Spleißoberteiles 14 auf der Unterseite.

Die Spleißlamellen 46 und 46'; 56 und 56' des Spleißober- 14 und -Unterteiles 18 bzw. 18' haben eine Dicke von 2 mm und sind auf den Hohlwellen 44 und 54 derart angeordnet, dass jeweils die rechten Spleißlamellen 46 des Spleißoberteiles 14 über den rechten Spleißlamellen 56 des Spleißunterteiles 18 positioniert sind.
Die linken Spleißlamellen 46' und 56' sind entsprechend positioniert.

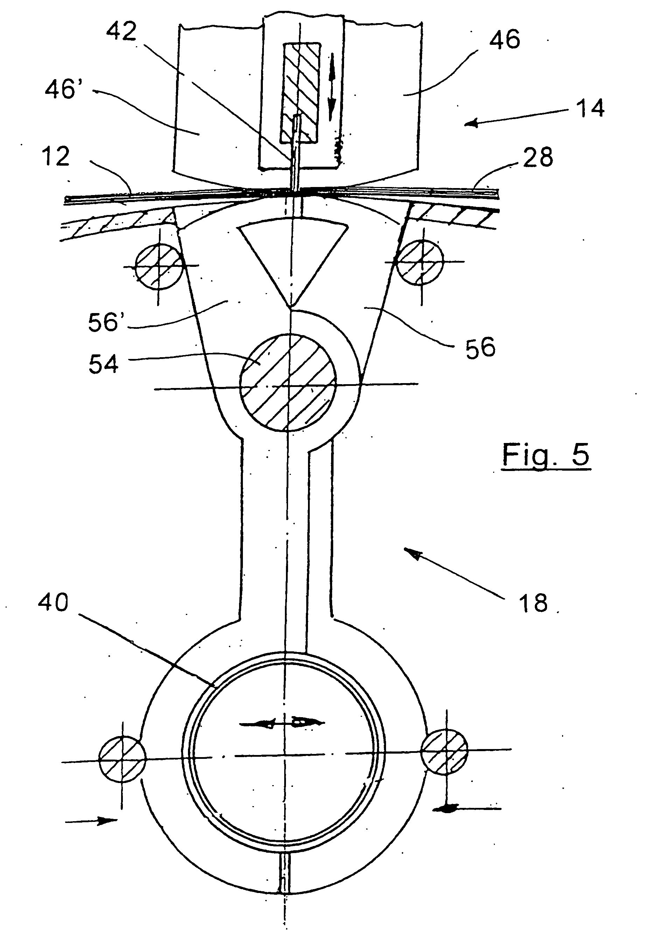

Der Spleißvorgang ist detailliert in Fig. 5 dargestellt:
Das Ende des gespleißten Abschnitts 28 sowie der Anfang des zu spleißenden Abschnitts 12 liegen an der abgesenkten Anschlagleiste 42 an.
Während sich das Spleißoberteil 14 absenkt, wird die Anschlagleiste 42 angehoben. Der Schlauch 40 ist entlüftet.
Durch Belüften des Schlauches 40 schließen sich die Spleißlamellen 56 und 56' des Spleißunterteiles 18 und verzahnen miteinander.
Kraftschlüssig über die Abschnitte 12 und 28 nehmen die Spleißlamellen 56 und 56' des Spleißunterteiles die Spleißlamellen 46 und 46' des Spleißoberteiles 14 mit und führen so den Spleißvorgang mit spezifisch gleicher Kraft über die gesamte Abschnittbreite aus. Während dieser Phase rotiert die Spleißtrommel 8.
Nach erfolgtem Spleißvorgang hebt das Spleißoberteil 14 ab, dadurch öffnen sich die Spleißlamellen 46 und 46'. Parallel dazu entlüftet der Schlauch 40 des Spleißunterteiles 18 und die Spleißlamellen 56 und 56' öffnen ebenfalls. Dieser Vorgang ist beendet, wenn die Spleißtrommel 8 einen Drehwinkel von 90° erreicht hat.

### 2. Funktion:

In der Ausgangsposition (Spleißvorbereitung) steht das Spleißoberteil 14 in angehobener Position, das in Arbeitsposition befindliche Spleißunterteil 18 steht senkrecht darunter, wobei der Schlauch 40 entlüftet ist. Der Spalt zwischen den Spleißlamellen 46 und 46' sowie 56 und 56' ist geöffnet.
Die Anschlagleiste 42 senkt sich auf das Spleißunterteil 18 ab. Gleichzeitig fördert die Rollenbahn 20, gesteuert über die Fotozelle 24 mit Wegerfassung das Ende der Lagenbahn 28 gegen die Anschlagleiste 42 zurück.
Parallel zu diesem Arbeitsgang wird der Anfang des zu spleißenden Abschnitts 12 durch den Zuführ-Gurtförderer 4, gesteuert über die Fotozelle 6 mit Wegerfassung, gegen die Vorderkante der Anschlagleiste 42 transportiert.

Es bildet sich damit ein weitestgehend gleichmäßiger Spalt zwischen der End- und Anfangskante der zu spleißenden Abschnitte 12 und 28.

Das Spleißoberteil 14 senkt sich auf das Spleißunterteil 18 ab, wobei gleichzeitig die Anschlagleiste 42 abhebt. Die beiden zu spleißenden Abschnitte sind damit kraftschlüssig fixiert. Der Schlauch 40 im Spleißunterteil 18 wird belüftet und drückt die Spleißlamellen 56 und 56' im Spleißbereich zusammen, wobei die kraftschlüssig fixierten Lagenenden sowie die Spleißlamellen 46 und 46' des Spleißoberteiles 14 mitgenommen werden.

Der Spalt zwischen den Spleißlamellen 46 und 46' verringert sich, die Spleißlamellen 56 und 56' greifen ineinander, wodurch aufgrund eines gleichmäßigen Druckes im Schlauch 40 über die gesamte Breite eine spezifisch gleiche Anpresskraft (Spleißkraft) aufgebaut wird.

Während dieses Spleißvorganges läuft die Spleißtrommel 8 um 180° um, wobei das Spleißoberteil 14 über die Arretierung 38 (Fig. 2) mitläuft, ihre Position zum Spleißunterteil 18 also nicht verändert.

Der Abschnitt 28 füllt die Ausgleichschleife 26, die entsprechend ihrem Füllgrad die Abwickelstation steuert.

Nachdem die Spleißtrommel 8 einen Weg von 90° zurückgelegt hat, hebt das Spleißoberteil 14 ab, die Arretierung 38 entriegelt, die Schwenkeinrichtung 40 transportiert das Spleißoberteil 14 in die Ausgangsposition zurück und der Schlauch 40 des Spleißunterteiles 18 entlüftet.
Die Bürstenwalze 30 löst evtl. einen an der Trommel 8 anhaftenden Abschnitt 28.

Nach erfolgter Drehung der Spleißtrommel 8 um 180° hat das zweite Spleißunterteil 18' die Arbeitsposition eingenommen und der gesamte Spleißvorgang wiederholt sich.
Der Zuführgurtförderer 4 hat inzwischen einen neuen Abschnitt 12 herangeführt. Während der Drehbewegung der Spleißtrommel 8 ist die Andrückrolle 16 abgehoben. Erst zum Ende der Bewegung hin, beim Rücktransport des Abschnitts 28 gegen die Rückseite der Anschlagleiste 42 liegt die Andrückrolle 16 auf dem Abschnitt 28 an.

### Bezugszeichenliste

- 2: Spleißanlage
- 4: Zuführ-Gurtförderer
- 6: Fotozelle
- 8: Spleißtrommel, Trommel, Spleißunterlage
- 10: Positioniermotor
- 12: einzelne Lage(n), Abschnitt
- 14: Spleißoberteil, (oberes) Backenpaar
- 16: Andrückrolle
- 18, 18': Spleißunterteil, (unteres) Backenpaar
- 20, 20': Rollenbahn
- 22: Positioniermotor
- 24: Fotozelle
- 26: Ausgleichsschleife
- 28: (gespleißte) Lage, Lagenbahn, Abschnitt
- 30: (angetriebene) Bürstenwalze
- 32: Spleißvorrichtung
- 34. 34': Seitenwände
- 36: Traverse
- 38: Arretierung
- 40: Schwenkmechanismus, Schwenkeinrichtung, Schlauch
- 42: Anlagebürste Anschlagleiste, Anschlag
- 44: Hohlwelle
- 46, 46': Spleißlamelle(n), (obere) Backen
- 48: Ringe
- 50, 50': Anschlagbolzen
- 52: Rückholmechanismus
- 54: Hohlwelle
- 56, 56': Spleißlamellen, (untere) Backen
- 58: Ringe
- 60, 60': Anschlagbolzen
- 62: Rückholmechanismus
- 64: Dreh-Luftzuführung

## Patentansprüche

1. Verfahren zum stumpfen Spleißen von Abschnitten (12, 28) aus Kautschukbeschichteten Cordbahnen mit einer Spleißvorrichtung (32),
- wobei die Spleißvorrichtung (32) ein Spleißoberteil (14) und ein Spleißunterteil (18,18') aufweist,
- wobei jeder Spleißvorgang gleichzeitig über die gesamte Spleißbreite der zu verbindenden gegenüberliegenden Abschnitte (12, 28) erfolgt,
**dadurch gekennzeichnet, dass**
das Spleißoberteil (14) sowie das Spleißunterteil (18, 18') jeweils Spleißlamellen (46, 46', 56, 56') aufweist und diese Spleißlamellen (46, 46', 56, 56') parallel zueinander frei beweglich angeordnet sind sowie beim Speißvorgang ineinandergreifen.

2. Verfahren nach Anspruch 1,
**dadurch gekennzeichnet,**
**dass**, nachdem das Spleißoberteil (14) in Kontakt mit den zu spleißenden Abschnitten (12, 28) gelangt ist, die Spleißlamellen (56, 56') über einen belüftetbaren Schlauch (40) bewegt werden.

3. Verfahren nach Anspruch 1 oder 2,
**dadurch gekennzeichnet,**
beim Speißvorgang die Spleißlamellen (56, 56') des Spleißunterteils (18, 18') geschlossen werden und dabei die Spleißlamellen (46, 46') des Spleißoberteils (14) kraftschlüssig mitnehmen.

4. Verfahren nach einem der Ansprüche 1 bis 3, **dadurch gekennzeichnet, dass** die als Spleißtrommel ausgebildete Spleißunterlage (8) während des Spleißvorganges rotiert, wobei das Spleißoberteil (14) über eine Arretierung (38) mitläuft und der Spleißvorgang beendet ist, wenn die Spleißtrommel (8) einen vorgegebenen Drehwinkel erreicht hat.

5. Verfahren nach einem der Ansprüche 1 bis 4,
**dadurch gekennzeichnet,**
**dass** das Spleißoberteil (14) nach erfolgtem Spleißvorgang von den gespleißten Abschnitten (12, 28) abhebt, wobei sich die oberen Spleißlamellen (46 und 46') mit Hilfe eines oberen Rückholmechanismus (52) öffnen, und
**dass** der Schlauch (40) des Spleißunterteils (18) bzw. (18') entlüftet wird, wodurch sich die unteren Spleißlamellen (56 und 56') mit Hilfe eines unteren Rückholmechanismus (62) öffnen.

6. Verfahren nach einem der Ansprüche 1 bis 5,
**dadurch gekennzeichnet,**
**dass** das zweite Spleißunterteil (18') nach erfolgter Drehung der Spleißtrommel (8) um 180° mit Hilfe eines pneumatisch oder hydraulisch betätigbaren Schwenkmechanismus die Arbeitsposition einnimmt und ein neuer Spleißvorgang vonstatten geht.

7. Vorrichtung zur Durchführung des Verfahrens zum stumpfen Spleißen von 500 bis 1.000 mm breiten Abschnitten (Lagenbahnen, 12, 28) oder der doppelten oder n-fachen Breite mit anschließendem Mittelschnitt, in die Kautschuk-beschichtete Cordbahnen (Kalander) unter einem Winkel von 55° bis 95° geradlinig zerlegt wurden, wobei die zuvor längs verlaufenden Corde (Kettfäden) quer angeordnet werden,
- wobei die Vorrichtung oberhalb und unterhalb einer Spleißunterlage (8) jeweils ein als Backenpaar ausgebildetes Spleißoberteil 14 und Spleißunterteil 18 bzw. 18' aufweist,
- wobei die Backen (46, 46'; 56, 56') jeden Backenpaares (14; 18 bzw. 18') horizontal zueinander und voneinander bewegbar sind,
- wobei die Backenpaare (14; 18 bzw. 18') insgesamt vertikal zueinander und voneinander bewegbar sind,
dass die horizontale und vertikale Bewegbarkeit der Backenpaare (14; 18 bzw. 18') unabhängig voneinander ist.
**dadurch gekennzeichnet,**
- **dass** die Spleißunterlage eine Spleißtrommel (8) ist,
- **dass** das Spleißoberteil 14 aus einem Satz Spleißlamellen (46, 46'; ...) besteht, deren Stirnflächen mit Hilfe eines Rückholmechanismus (52) einen Spalt bilden, und
- **dass** das Spleißunterteil 18 bzw. 18' in die Spleißtrommel )8) eingelassen ist, und ebenfalls aus einem Satz Spleißlamellen (56, 56'; ...) besteht, deren Stirnflächen mit Hilfe eines Rückholmechanismus (62) einen Spalt bilden,
wobei bei Kraftschluss zwischen Spleißoberteil (14) und Spleißunterteil (18 bzw. 18') die zwischen dem oberen Satz Spleißlamellen (46, 46'; ...) und dem unteren Satz Spleißlamellen (56, 56'; ...) befindlichen Spalte mit Hilfe eines pneumatisch betätigbaren Schwenkmechanismus (40) schließbar sind.

8. Vorrichtung nach Anspruch 7,
**dadurch gekennzeichnet,**
**dass** die Spleißlamellen (46, 46'; 56, 56') des Spleißober- (14) und -Unterteiles (18 bzw. 18') eine Dicke von 1 bis 10 mm aufweisen und auf Hohlwellen (44 und 54) derart angeordnet sind, dass jeweils die rechten Spleißlamellen (46, ...) des Spleißoberteils (14) über den rechten Spleißlamellen (56, ...) des Spleißunterteiles (18 bzw. 18') positioniert sind, und dass die linken Spleißlamellen (46', ... und 56', ...) entsprechend positioniert sind.

9. Vorrichtung nach einem der Ansprüche 7 oder 8,
**dadurch gekennzeichnet,**
**dass** die Spleißlamellen (46, 46'; ...) des Spleißoberteils auf ihrer Unterseite in der Mitte gleichmäßig verzahnt sind.

10. Vorrichtung nach einem der Ansprüche 7 bis 9,
**dadurch gekennzeichnet,**
**dass** die Spleißtrommel (8) zwei unter 180° oder drei unter 120° zueinander versetzt angeordnete Spleißunterteile (18, 18') bzw. (18, 18', ...) aufweist, wobei die Spleißtrommel (8) durch einen ein- und auskuppelbaren Positioniermotor (10) um jeweils 180° bzw. 120° antreibbar ist.

11. Vorrichtung nach einem der Ansprüche 7 bis 10,
**gekennzeichnet durch**
folgende zusätzliche Komponenten:
- einen Zuführ-Gurtförderer (4), angetrieben **durch** einen Positioniermotor, gesteuert über Fotozelle (6) und Wegerfassung, zum Transport und Positionieren einzelner Abschnitte (12);
- eine Ausgleichsschleife (26), in die der gespleißte Abschnitt (28) gefördert wird und welche eine Aufwickelstation steuert,
- eine angetriebene Bürstenwalze (30) zum Lösen eines evtl. anhaftenden Abschnittes (28) von der Trommel (8), und
- eine speicherprogrammierbare Steuerung (SPS) zur Steuerung der Spleißanlage.

## Claims

1. Method for the butt splicing of portions (12, 28) of rubber-coated cord webs with a splicing apparatus (32),
- the splicing apparatus (32) having an upper splicing part (14) and a lower splicing part (18, 18'),
- each splicing operation taking place simultaneously over the entire splicing width of the portions (12, 28) lying opposite one another that are to be joined,
**characterized in that**
the upper splicing part (14) and the lower splicing part (18, 18') respectively have splicing plates (46, 46', 56, 56') and these splicing plates (46, 46', 56, 56') are arranged in a freely movable manner parallel to one another and engage in one another during the splicing operation.

2. Method according to Claim 1, **characterized in that**, once the upper splicing part (14) has come into contact with the portions (12, 28) to be spliced, the splicing plates (56, 56') are moved by means of an inflatable tube (40).

3. Method according to Claim 1 or 2, **characterized in that**, during the splicing operation, the splicing plates (56, 56') of the lower splicing part (18, 18') are closed and thereby take with them the splicing plates (46, 46') of the upper splicing part (14) by frictional engagement.

4. Method according to one of Claims 1 to 3, **characterized in that** the splicing base (8) formed as a splicing drum rotates during the splicing operation, the upper splicing part (14) running with it by means of an arresting mechanism (38) and the splicing operation being completed when the splicing drum (8) has reached a predetermined angle of rotation.

5. Method according to one of Claims 1 to 4, **characterized in that**, once the splicing operation has taken place, the upper splicing part (14) lifts off from the spliced portions (12, 28), the upper splicing plates (46 and 46') opening with the aid of an upper retracting mechanism (52), and **in that** the tube (40) of the lower splicing part (18) or (18') is deflated, whereby the lower splicing plates (56 and 56') open with the aid of a lower retracting mechanism (62).

6. Method according to one of Claims 1 to 5, **characterized in that**, once the splicing drum (8) has completed a rotation of 180°, the second lower splicing part (18') assumes the working position, with the aid of a pneumatically or hydraulically operable pivoting mechanism, and a new splicing operation proceeds.

7. Apparatus for carrying out the method for the butt splicing of portions (laminated webs, 12, 28) 500 to 1000 mm wide, or twice or n times the width, with a subsequent middle cut, in which rubber-coated cord webs (calender) are cut up at an angle of 55° to 95° along straight lines, the previously longitudinally running cords (warp threads) being arranged transversely,
- the apparatus having respectively above and below a splicing base (8) an upper splicing part 14 and a lower splicing part 18 or 18', formed as pairs of jaws,
- the jaws (46, 46'; 56, 56') of each pair of jaws (14; 18 or 18') being movable horizontally towards and away from one another,
- the pairs of jaws (14; 18 or 18') being movable together vertically towards and away from one another,
- and the horizontal and vertical freedom of movement of the pairs of jaws (14; 18 or 18') being independent of one another,
**characterized**
- **in that** the splicing base is a splicing drum (8),
- **in that** the upper splicing part 14 comprises a set of splicing plates (46, 46';...), the end faces of which form a gap with the aid of a retracting mechanism (52), and
- **in that** the lower splicing part 18 or 18' is recessed into the splicing drum (8), and likewise comprises a set of splicing plates (56, 56';...), the end faces of which form a gap with the aid of a retracting mechanism (62), it being possible when there is frictional engagement between the upper splicing part (14) and the lower splicing part (18 or 18') for the gaps between the upper set of splicing plates (46, 46';...) and the lower set of splicing plates (56, 56';...) to be closed with the aid of a pneumatically operable pivoting mechanism (40).

8. Apparatus according to Claim 7, **characterized in that** the splicing plates (46, 46'; 56, 56') of the upper splicing part (14) and the lower splicing part (18 or 18') have a thickness of from 1 to 10 mm and are arranged on hollow shafts (44 and 54) in such a way that the right-hand splicing plates (46,...) of the upper splicing part (14) are respectively positioned over the right-hand splicing plates (56,...) of the lower splicing part (18 or 18'), and **in that** the left-hand splicing plates (46',... and 56',...) are correspondingly positioned.

9. Apparatus according to either of Claims 7 and 8, **characterized in that** the splicing plates (46, 46';...) of the upper splicing part are uniformly serrated in the middle on their underside.

10. Apparatus according to one of Claims 7 to 9, **characterized in that** the splicing drum (8) has two lower splicing parts (18, 18') arranged offset by 180° or three lower splicing parts (18, 18',...) arranged offset by 120°, it being possible for the splicing drum (8) to be driven respectively by 180° or 120° by a positioning motor (10) which can be engaged and disengaged.

11. Apparatus according to one of Claims 7 to 10, **characterized by** the following additional components:
- a feeding belt conveyor (4), driven by a positioning motor, controlled by means of a photocell (6) and displacement sensing, for transporting and positioning individual portions (12);
- a compensating loop (26), into which the spliced portion (28) is conveyed and which controls a winding-up station,
- a driven brush roller (30) for detaching a possibly attaching portion (28) from the drum (8), and
- a stored-program controller (SPC) for controlling the splicing unit.

## Revendications

1. Procédé pour épisser bout à bout des tronçons (12, 28) de bandes de câbles recouverts de caoutchouc au moyen d'un épissoir (32),
- l'épissoir (32) présentant une partie supérieure d'épissoir (14) et une partie inférieure d'épissoir (18, 18'),
- chaque opération d'épissage étant effectuée simultanément sur toute la largeur d'épissage des tronçons (12, 28) placés l'un en face de l'autre et à relier, **caractérisé en ce que** la partie supérieure d'épissoir (14) et la partie inférieure d'épissoir (18, 18') présentent chacune des lamelles d'épissage (46, 46', 56, 56') et **en ce que** ces lamelles d'épissage (46, 46', 56, 56') sont agencées parallèlement les unes par rapport aux autres de façon à pouvoir se déplacer librement et s'engagent les unes dans les autres lors de l'opération d'épissage.

2. Procédé selon la revendication 1, **caractérisé en ce qu'**après que la partie supérieure d'épissoir (14) est entrée en contact avec les tronçons à épisser (12, 28), les lamelles d'épissage (56, 56') sont déplacées par l'intermédiaire d'un tuyau flexible (40) qui peut être ventilé.

3. Procédé selon les revendications 1 ou 2, **caractérisé en ce que**, lors de l'opération d'épissage, les lamelles d'épissage (56, 56') de la partie inférieure d'épissoir (18, 18') sont fermées et entraînent par correspondance mécanique les lamelles d'épissage (46, 46') de la partie supérieure d'épissoir (14).

4. Procédé selon l'une des revendications 1 à 3, **caractérisé en ce que** la base d'épissage (8) configurée comme tambour d'épissoir tourne pendant l'opération d'épissage, la partie supérieure d'épissoir (14) étant entraînée au moyen d'une butée (38) et l'opération d'épissage prenant fin lorsque le tambour d'épissoir (8) a atteint un angle de rotation prédéterminé.

5. Procédé selon l'une des revendications 1 à 4, **caractérisé en ce que**, une fois que l'opération d'épissage est terminée, la partie supérieure d'épissoir (14) se soulève des tronçons épissés (12, 28), les lamelles supérieures d'épissage (46 et 46') s'ouvrant à l'aide d'un mécanisme supérieur de rappel (52), et **en ce que** le tuyau flexible (40) de la partie inférieure d'épissoir (18) ou (18') est n'est plus alimenté en air, suite à quoi les lamelles intérieures d'épissage (56 et 56') s'ouvrent à l'aide d'un mécanisme inférieur de rappel (62).

6. Procédé selon l'une des revendications 1 à 5, **caractérisé en ce qu'**une fois que le tambour d'épissoir (8) a effectué une rotation de 180°, la deuxième partie inférieure d'épissoir (18') adopte sa position de travail à l'aide d'un mécanisme de pivotement qui peut être actionné par des moyens pneumatiques ou hydrauliques et, à partir de cette position, commence une nouvelle opération d'épissage.

7. Dispositif pour effectuer le procédé d'épissage bout à bout de tronçons d'une largeur comprise entre 500 et 1 000 mm (couches de bandes, 12, 28) ou de largeur double ou n fois plus élevée et dont les tronçons médians sont contigus, dans lequel des bandes de câbles recouverts de caoutchouc (par calandrage) sont coupées en ligne droite à un angle compris entre 55° et 95°, les câbles (fils de chaîne) qui, jusqu'alors, étaient orientés longitudinalement, étant agencés transversalement,
- le dispositif présentant au-dessus et en dessous d'une base d'épissage (8) respectivement une partie supérieure d'épissoir (14) et une partie inférieure d'épissoir (18 ou 18') dont chacune est configurée comme paire de mâchoires,
- les mâchoires (46, 46'; 56, 56') de chaque paire de mâchoires (14; 18 ou 18') pouvant être rapprochées ou éloignées horizontalement l'une de l'autre,
- les paires de mâchoires (14; 18 ou 18') pouvant être rapprochées et éloignées l'une des l'autre verticalement dans leur totalité, les paires de mâchoires (14; 18 ou 18') pouvant indépendamment se déplacer horizontalement et verticalement,
**caractérisé en ce que** :
- la base d'épissage est un tambour d'épissoir (8),
- la partie supérieure d'épissoir 14 est constituée d'un ensemble de lamelles d'épissage (46, 46'; ...) dont les surfaces frontales forment une fente au moyen d'un mécanisme de rappel (52),
- la partie inférieure d'épissoir (18 ou 18') est emboîtée dans le tambour d'épissoir (8) et est également constituée d'un ensemble de lamelles d'épissage (56, 56'; ...) dont les surfaces frontales forment une fente à l'aide d'un mécanisme de rappel (62), les fentes situées entre l'ensemble supérieur de lamelles d'épissage (46, 46'; ...) et l'ensemble inférieur de lamelles d'épissage (56, 56'; ...) pouvant être fermées en correspondance mécanique entre la partie supérieure d'épissoir (14) et la partie inférieure d'épissoir (18 et 18') à l'aide d'un mécanisme de pivotement (40) qui peut être actionné par des moyens pneumatiques.

8. Dispositif selon la revendication 7, **caractérisé en ce que** les lamelles d'épissage (46, 46'; 56, 56') de la partie supérieure d'épissoir (14) et de la partie inférieure d'épissoir (18 ou 18') ont une épaisseur comprise entre 1 et 10 mm et sont agencées sur des arbres creux (44 et 54) de telle façon que les lamelles d'épissage de droite (46, ...) de la partie supérieure d'épissoir (14) soient placées sur les lamelles d'épissage de droite (56, ...) de la partie inférieure d'épissoir (18 et 18') et que les lamelles d'épissage de gauche (46', ... et 56', ...) soient placées de façon correspondante.

9. Dispositif selon l'une des revendications 7 ou 8, **caractérisé en ce que** les lamelles d'épissage (46, 46'; ...) de la partie supérieure d'épissoir sont dentelées de façon régulière sur le milieu de leur côté inférieur.

10. Dispositif selon l'une des revendications 7 à 9, **caractérisé en ce que** le tambour d'épissoir (8) présente deux parties inférieures d'épissoir (18, 18') disposées l'une par rapport à l'autre à un angle de 180° ou présentent trois parties inférieures d'épissoir (18, 18', ...) disposées deux à deux à un angle de 120°, le tambour d'épissoir (8) pouvant être entraîné respectivement de 180° ou de 120° au moyen d'un moteur de positionnement (10) que l'on peut coupler et découpler.

11. Dispositif selon l'une des revendications 7 à 10, **caractérisé par** les composants supplémentaires suivants :
- une bande d'amenée (4) entraînée par un moteur de positionnement commandé par l'intermédiaire d'une cellule optique (6) et d'un dispositif de saisie de parcours pour le transport et le positionnement de différents tronçons (12),
- une courbe de compensation (26), dans laquelle le tronçon épissé (28) est guidé et qui commande un poste d'enroulement,
- un cylindre (30) à brosses entraîné qui détache du tambour (8) un tronçon (28) qui y serait éventuellement attaché et
- une commande programmable (CP) qui commande l'installation d'épissage.
